# EUROPÄISCHE PATENTSCHRIFT

(11) **EP 2 105 186 B1**
(45) Veröffentlichungstag und Bekanntmachung des Hinweises auf die Patenterteilung: **12.06.2013**
(21) Anmeldenummer: 09004240.9
(22) Anmeldetag: 25.03.2009
(51) Int. Cl.: B01D 53/04, B01D 53/26, B60T 17/00

(54) **Entlüftungsvorrichtung für eine Druckluftaufbereitungsanlage und Verfahren zum Demontieren einer Lufttrocknerpatrone einer Druckluftaufbereitungsanlage**
Ventilation device for a compressed air preparation device and method for dismantling a compressed air preparation device
Dispositif d'aération pour une installation de traitement de l'air comprimé et procédé de démontage d'une cartouche de dessiccateur d'une installation de traitement de l'air comprimé

(30) Priorität: 28.03.2008 DE 102008016073
(43) Veröffentlichungstag der Anmeldung: 30.09.2009
(73) Patentinhaber: KNORR-BREMSE Systeme für Nutzfahrzeuge GmbH, 80809 München (DE)
(72) Erfinder: Schnittger, Karsten, 80935 München (DE)
(74) Vertreter: Schönmann, Kurt

(56) Entgegenhaltungen:
- EP-A- 0 234 229
- WO-A-2005/113309
- WO-A-2006/048640
- DE-A1-102006 037 307
- DE-A1-102006 037 311

## Beschreibung

Die Erfindung betrifft eine Entlüftungsvorrichtung für eine eine Lufttrocknerpatrone umfassende Druckluftaufbereitungsanlage mit einer Entlüftungsöffnung in einem Lufttrocknergehäuse der Druckluftaufbereitungsanlage.

Eine derartige Vorrichtung ist aus der DE 102006037307 A1 bekannt.

Die Erfindung betrifft weiterhin ein Verfahren zur sicheren Demontage einer an einem Lufttrocknergehäuse einer Druckluftaufbereitungsanlage montierten Lufttrocknerpatrone.

Nutzfahrzeuge verfügen üblicherweise über viele druckluftverbrauchende Teilsysteme, die von einer gemeinsamen Druckluftaufbereitungsanlage mit Druckluft versorgt werden. Zu den druckluftverbrauchenden Teilsystemen des Nutzfahrzeugs gehören beispielsweise Betriebsbremsen und eine Luftfederung. Diese Luftverbraucher benötigen aufbereitete Druckluft, die insbesondere von Feuchtigkeit und Ölpartikeln gereinigt wurde, um dauerhaft zuverlässig arbeiten zu können. Die Druckluftaufbereitungsanlage ist daher eine zentrale Komponente des Fahrzeugs, in der die von einem Kompressor geförderte öl- und wasserhaltige Luft gefiltert und gereinigt wird. Die komprimierte Luft wird über ein Mehrkreisschutzventil mit den benötigten Drücken und in der richtigen Befühlreihenfolge den verschiedenen Verbraucherkreisen im Nutzfahrzeug zugeteilt, die durch das Mehrkreisschutzventil gegeneinander abgesichert werden. Im Defektfall eines Betriebsbremskreises sind daher die mindestens zwei voneinander getrennten Bremskreise der Betriebsbremse gegeneinander abgesichert, so dass zur Abbremsung des Fahrzeugs noch eine ausreichende Hilfsbremswirkung zur Verfügung steht.

Das Reinigen und Trocknen der geförderten Luft geschieht in einer Lufttrocknerpatrone, die an einem Lufttrocknergehäuse montierbar ist und Bestandteil der Druckluftaufbereitungsanlage ist. Die Lufttrocknerpatrone ist ein Verschleißteil, welches in regelmäßigen Abständen ersetzt werden muss, um eine ausreichende Trocknungs- und Reinigungsleistung der geförderten Druckluft zu erreichen. Daher ist eine leicht zu lösende Verbindung zwischen der Lufttrocknerpatrone und dem Lufttrocknergehäuse vorteilhaft. Zur Befestigung der Lufttrocknerpatrone an dem Lufttrocknergehäuse sind im Stand der Technik verschiedene Möglichkeiten bekannt.

Eine erste Möglichkeit besteht darin, die Lufttrocknerpatrone auf einem an dem Lufttrocknergehäuse angeordneten Gewinde aufzuschrauben. Dabei wird die Lufttrocknerpatrone relativ zu dem Lufttrocknergehäuse gedreht. Die Abdichtung zwischen der Lufttrocknerpatrone und dem Lufttrocknergehäuse wird mit einer axialen Dichtung erreicht, welche erst dann eine dichte Verbindung ermöglicht, wenn die Lufttrocknerpatrone vollständig auf das Lufttrocknergehäuse aufgeschraubt ist. Umgekehrt erlaubt dies bei einer Demontage der Lufttrocknerpatrone, dass ein eventuell im Inneren der Lufttrocknerpatrone verbliebener Druck über die bereits undicht gewordene Dichtung entweichen kann, während die Lufttrocknerpatrone noch von dem Gewinde an dem Lufttrocknergehäuse gehalten wird. Nachteilig hierbei ist die für das Gewinde notwendige erhöhte axiale Baulänge von Lufttrocknergehäuse und Lufttrocknerpatrone.

Eine zweite Möglichkeit zum Befestigen einer Lufttrocknerpatrone besteht darin, die Lufttrocknerpatrone zunächst auf dem Lufttrocknergehäuse aufzusetzen und anschließend mit einem Bajonettring zu verriegeln. Beim Verriegeln wird dabei nur der Bajonettring relativ zu dem Lufttrocknergehäuse mit der aufgesetzten Lufttrocknerpatrone gedreht. Bei dieser Konstruktion ist eine dichte Verbindung zwischen dem Lufttrocknergehäuse und der Lufttrocknerpatrone bereits nach dem Aufsetzen der Lufttrocknerpatrone auf das Lufttrocknergehäuse gegeben. Die Verriegelung durch den Bajonettring stellt lediglich eine kraftschlüssige Verbindung zwischen dem Lufttrocknergehäuse und der Lufttrocknerpatrone her. Bei der Demontage der Lufttrocknerpatrone bedeutet dies ein nicht unwesentliches Gefährdungspotential. Wird die durch den Bajonettring hergestellte Verriegelung geöffnet, so ist die Lufttrocknerpatrone zwar noch dicht mit dem Lufttrocknergehäuse verbunden, jedoch ist diese Verbindung nicht mehr kraftschlüssig, so dass ein eventuell in der Lufttrocknerpatrone vorhandener Druck für ein Wegfliegen der Lufttrocknerpatrone sorgen kann. Dabei kann die Lufttrocknerpatrone den Monteur verletzen.

Dieser Mangel wird üblicherweise durch eine Entlüftungsvorrichtung ausgeglichen, die einen gesonderten Arbeitsschritt des Monteurs zum Entlüften der Patrone erfordert. Die Entlüftungsvorrichtung kann beispielsweise ein federbelasteter Entlüftungsstift sein, welcher zuerst gegen eine Federkraft aus einer Bohrung herausgezogen werden muss, bevor der Bajonettring gedreht werden kann. Ein weiteres Beispiel für eine derartige Entlüftungsvorrichtung ist eine Entlüftungsschraube, welche zuerst entfernt werden muss, bevor der Bajonettring gedreht werden kann. Mit dem Betätigen der Entlüftungsvorrichtung wird sowohl der Bajonettring entsichert als auch die Luftfilterpatrone sicher entlüftet. Eine Verliersicherung ist dabei separat vorzusehen, damit alle Teile der Entlüftungsvorrichtung für die folgende Montage wieder zur Verfügung stehen.

Der Erfindung liegt die Aufgabe zugrunde, die oben genannten Nachteile bei der Montage einer Luftfilterpatrone an einem Lufttrocknergehäuse mit einem Bajonettring zumindest teilweise zu beheben.

Diese Aufgabe wird mit den unabhängigen Ansprüchen gelöst.

Vorteilhafte Ausführungsformen ergeben sich aus den abhängigen Ansprüchen.

Die Erfindung baut auf der gattungsgemäßen Entlüftungsvorrichtung dadurch auf, dass die Entlüftungsvorrichtung ein Dichtelement umfasst, welches ständig an dem Lufttrocknergehäuse befestigt ist und die Entlüftungsöffnung dicht verschließt, wenn die Lufttrocknerpatrone an dem Lufttrocknergehäuse montiert ist. Durch die ständige Befestigung des Dichtelements an dem Lufttrocknergehäuse ist die Verliersicherheit aller zur Entlüftungsvorrichtung gehörenden Teile gewährleistet. Dabei soll die Formulierung, dass das Dichtelement ständig an dem Lufttrocknergehäuse befestigt sein kann, sich explizit auf die Zeiträume während der Montage und der Demontage der Lufttrocknerpatrone beziehen. Ein nachträgliches Lösen des Dichtelements, insbesondere zum Austauschen im Falle eines Defekts bei bereits demontierter Lufttrocknerpatrone, soll hingegen unschädlich sein.

Nützlicher Weise kann vorgesehen sein, dass das Dichtelement ein elastische Element zum Abdichten der Entlüftungsöffnung umfasst. Ein elastisches Element, zum Beispiel ein künstliches Polymer, im Folgenden einfach als Gummielement bezeichnet, als Bestandteil des Dichtelements bietet eine einfache Möglichkeit zur Abdichtung der Entlüftungsöffnung in dem Lufttrocknergehäuse.

Besonders bevorzugt ist, dass das Dichtelement einen Metallstreifen umfasst. Ein Metallstreifen, insbesondere federnd ausgeführt, kann in einfacher Weise die Entlüftungsöffnung in dem Lufttrocknergehäuse abdecken und bei montierter Lufttrockerpatronen abdichten.

Vorteilhafter Weise kann dabei vorgesehen sein, dass die Entlüftungsvorrichtung Mittel zum Anpressen des Dichtelements an das Lufttrocknergehäuse umfasst. Durch die Mittel zum Anpressen des Dichtelements an das Lufttrocknergehäuse ist die Entlüftungsöffnung in dem Lufttrocknergehäuse bei montierter Lufttrocknerpatrone besonders dicht verschließbar.

Vorzugsweise kann vorgesehen sein, dass die Mittel zum Anpressen des Dichtelements an einem die Lufttrocknerpatrone am Lufttrocknergehäuse fixierenden Bajonettring angeordnet sind. Durch das Vorsehen der Mittel zum Anpressen des Dichtelements an dem Bajonettring ist die Entlüftung der Luftfilterpatrone automatisch mit einer Drehbewegung des Bajonettrings verbindbar. Ein zusätzlicher Arbeitsschritt zum separaten Entlüften der Luftfilterpatrone kann daher entfallen.

Insbesondere kann vorgesehen sein, dass die Mittel zum Anpressen des Dichtelements bei montierter Lufttrocknerpatrone in einer Rastung fixiert sind. Das Vorsehen einer Rastung zum Fixieren der Mittel zum Anpressen des Dichtelements gewährleistet eine gleichmäßige Abdichtung der Entlüftungsöffnung bei montierter Luftfilterpatrone, durch einen definierten Anpressdruck.

Insbesondere kann vorgesehen sein, dass die Rastung an dem Dichtelement angeordnet ist. Durch das Anordnen der Rastung an dem Dichtelement wird auch eine Belüftung der Luftfilterpatrone bei unsachgemäßer oder unvollständiger Montage an dem Lufttrocknergehäuse unterbunden.

Das Gattungsgemäße Verfahren wird dadurch weiter entwickelt, dass in einem ersten Schritt ein Bajonettring mit Mitteln zum Anpressen eines Dichtelements an eine in dem Lufttrocknergehäuse angeordnete Entlüftungsöffnung aus einer Verriegelungsposition gedreht wird, wobei gleichzeitig das Dichtelement von dem Anpressdruck der Mittel zum Anpressen entlastet wird und durch die Entlüftungsöffnung eine Entlüftung der Lufttrocknerpatrone erfolgt, dass in einem zweiten Schritt der Bajonettring weiter in eine Montage-/Demontageposition gedreht wird, in welcher zumindest die Lufttrocknerpatrone von dem Lufttrocknergehäuse abhebbar ist und dass in einem dritten Schritt zumindest die Lufttrocknerpatrone von dem Lufttrocknergehäuse abgehoben wird.

Auf diese Weise werden die Vorteile und Besonderheiten der erfindungsgemäßen Entlüftungsvorrichtung auch im Rahmen eines Verfahrens umgesetzt.

Die Erfindung wird nun mit Bezug auf die begleitenden Zeichnungen anhand bevorzugter Ausführungsformen beispielhaft erläutert.

Es zeigen:
- Figur 1: eine schematische Darstellung eines Fahrzeugs mit einer Druckluft- aufbereitungsanlage;
- Figur 2: einen Ausschnitt eines Lufttrocknergehäuses von Außen mit Dicht- element und Bajonettring im arretierten Zustand;
- Figur 3: ein zweidimensionales Schnittbild durch eine erfindungsgemäße Entlüftungsvorrichtung im arretierten Zustand;
- Figur 4: einen Ausschnitt eines Lufttrocknergehäuses von Außen mit Dicht- element und Bajonettring im nicht arretierten Zustand und
- Figur 5: ein zweidimensionales Schnittbild durch eine erfindungsgemäße Entlüftungsvorrichtung im nicht arretierten Zustand.

In den folgenden Zeichnungen bezeichnen gleiche Bezugszeichen gleiche oder gleichartige Teile.

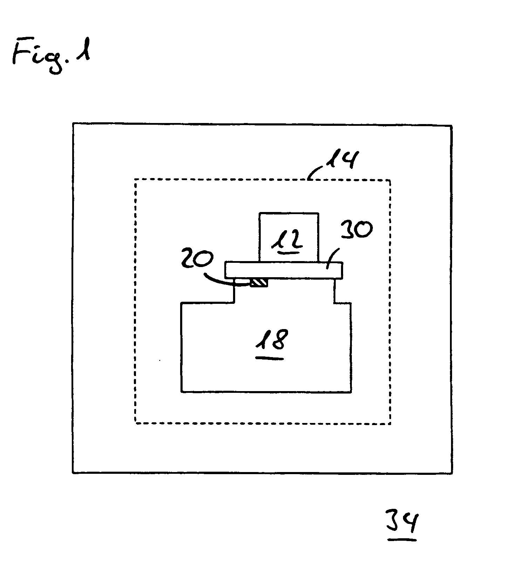

Figur 1 zeigt eine schematische Darstellung eines Fahrzeugs mit einer Druckluftaufbereitungsanlage. Ein dargestelltes Fahrzeug 34, insbesondere ein Nutzfahrzeug, umfasst eine Druckluftaufbereitungsanlage 14 mit einem Lufttrocknergehäuse 18 an welches eine Lufttrocknerpatrone 12 montiert ist, die über einen Bajonettring 30 fixiert wird. Weiterhin ist ein Dichtelement 20 angedeutet, welches eine Sicherheitsentlüftung der Lufttrocknerpatrone 12 vor einer Demontage der Lufttrocknerpatrone 12 ermöglicht.

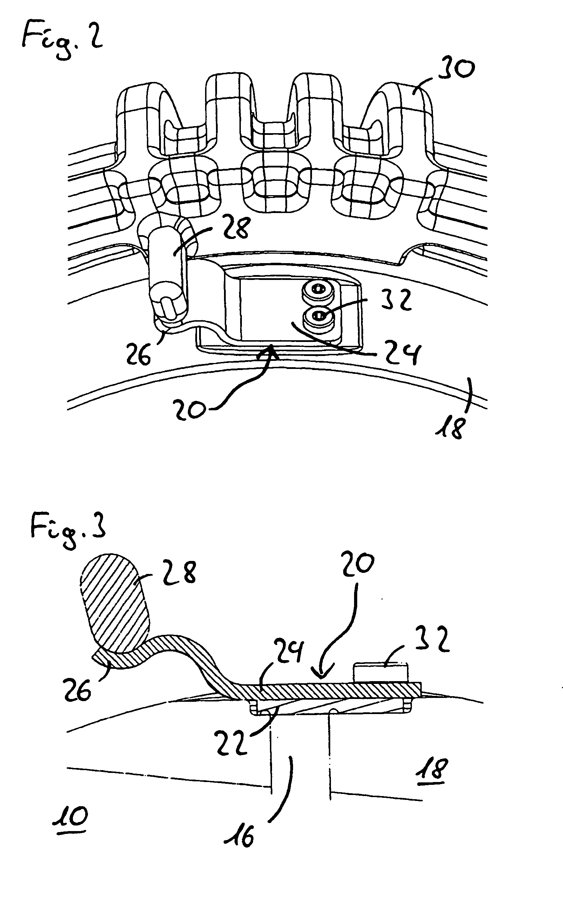

Figuren 2 und 3 zeigen aus unterschiedlichen Perspektiven einen Ausschnitt eines Lufttrocknergehäuses 18 mit einer erfindungsgemäßen Entlüftungsvorrichtung 10 im arretierten Zustand. Eine Entlüftungsöffnung 16 ist in einem Lufttrocknergehäuse 18 angeordnet und wird von einem Dichtelement 20 gegenüber der Umgebung von Außen dicht verschlossen, wobei das Dichtelement 20 ein elastisches Element 22, zum Beispiel ein künstliches Polymer mit elastischen Eigenschaften, und einen gebogenen Metallstreifen 24 mit einer Rastung 26 umfasst. Die Entlüftungsöffnung 16 reicht nach Innen in das Innere des Lufttrocknergehäuses 18 hinein bis unter die Lufttrocknerpatrone und ermöglicht vor der Demontage ein sicheres Abführen eines erhöhten Innendrucks aus der Lufttrocknerpatrone über die Entlüftungsöffnung 16 nach Außen. Das Dichtelement 20 ist über Befestigungsmittel 32 ständig mit dem Lufttrocknergehäuse 18 verbunden. Die Befestigungsmittel 32 können Beispielsweise Nieten oder Schrauben sein. Eine dauerhafte Klemmverbindung, Verklebung oder Verschweißung ist ebenfalls denkbar. Ständig bedeutet in diesem Zusammenhang, dass das Dichtelement 20 während der Montage beziehungsweise der Demontage mit dem Lufttrocknergehäuse 18 verbunden sein kann. Ein nachträgliches Lösen der Verbindung bei demontierter Lufttrocknerpatrone kann jedoch möglich sein. Das elastische Element 22 kann Beispielsweise mit dem Metallstreifen 24 verklebt sein beziehungsweise durch die Befestigungsmittel 32 zwischen dem Metallstreifen 24 und dem Lufttrocknergehäuse 18 durch Verklemmen fixiert werden. Der Metallstreifen 24 ist vorzugsweise ein federnder Blechstreifen, wobei das den Befestigungsmitteln 32 abgewandte Ende durch eine leicht S-förmige Krümmung eine Rastung 26 für Mittel 28 zum Anpressen des Dichtelements 20 aufweist. Die Mittel 28 zum Anpressen des Dichtelements 20 können Beispielsweise als ein Zapfen beziehungsweise eine Nase ausgebildet sein, die mit einem Bajonettring 30 fest verbunden sind. Ist die nicht dargestellte Lufttrocknerpatrone auf das Lufttrocknergehäuse 18 aufgesetzt, so kann eine kraftschlüssige Verbindung zwischen der Lufttrocknerpatrone und dem Lufttrocknergehäuse 18 durch den Bajonettring 30 erreicht werden, indem der Bajonettring 30 in eine Verriegelungsposition gedreht wird. Dabei werden automatisch die Mittel 28 zum Anpressen des Dichtelements 20 entlang der S-förmigen Krümmung des Metallstreifens 24 bewegt und kommen schließlich in der Rastung 26 zur Ruhe. Insbesondere ist dabei möglich, dass die Rastung 26 selbst die Verriegelungsposition des Bajonettrings 30 definiert, indem ein weiteres Verdrehen des Bajonettrings 30 über die Rastung 26 hinaus aufgrund der Krümmung des Metallstreifens 24 verhindert wird. In dieser Verriegelungsposition wird das Dichtelement 20 von den Mitteln 28 zum Anpressen mit einem definierten Anpressdruck gegen das Lufttrocknergehäuse 18 gedrückt und das elastisches Element 22 verschließt die Entlüftungsöffnung 16 dicht.

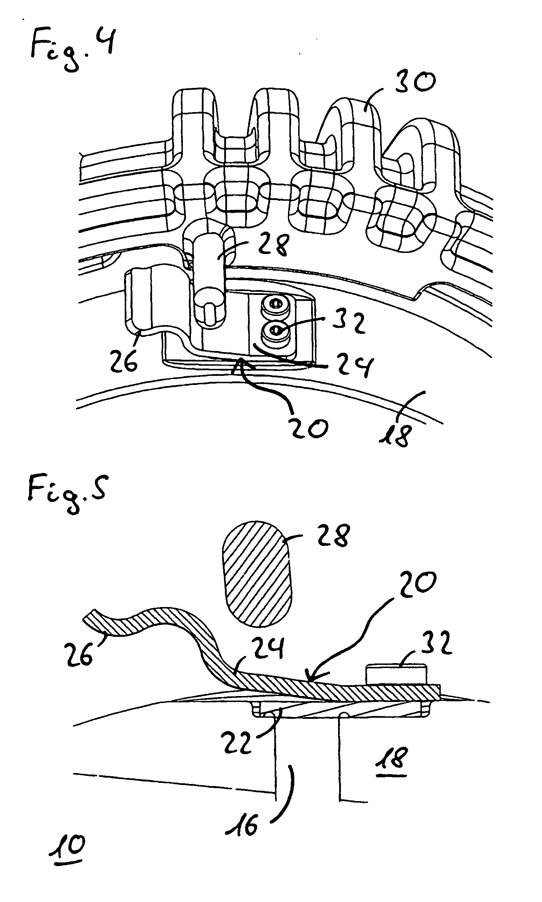

Die Figuren 4 und 5 zeigen jeweils identische Darstellungen wie die Figuren 2 und 3, wobei jedoch jeweils ein nicht arretierter Zustand der Entlüftungsvorrichtung 10 dargestellt ist. Wird der Bajonettring 30 aus der Verriegelungsposition gedreht, so verlassen die Mittel 28 zum Anpressen des Dichtelements 20 gleichzeitig die Rastung 26 und verringern dabei den auf den Metallstreifen 24 wirkenden Anpressdruck, weshalb sich das Dichtelement 20 von dem Lufttrocknergehäuse 18 wegbiegen kann, und gleichzeitig die Entlüftungsöffnung 16 freigibt. Wird anschließend der Bajonettring 30 weiter in eine Montage- / Demontageposition gedreht und damit die kraftschlüssige Verbindung zwischen der Lufttrocknerpatrone und dem Lufttrocknergehäuse 18 gelöst, so kann die Lufttrocknerpatrone gefahrlos von dem Lufttrocknergehäuse 18 abgehoben werden, da eine Entlüftung bereits stattgefunden hat. Je nach Ausgestaltung des Bajonettrings 30 ist dabei zuvor der Bajonettring 30 ebenfalls von den Lufttrocknergehäuse 18 abzuheben. Es ist jedoch auch denkbar, dass der Bajonettring 30 auf dem Lufttrocknergehäuse 18 verbleiben kann.

Die Entlüftungsvorrichtung 10 wird also beim Lösen des Bajonettrings 30 selbsttätig tätig, wobei die Luft aus der nicht dargestellten Lufttrocknerpatrone entweichen kann, bevor der Bajonettring 30 komplett entriegelt ist. Die kraftschlüssige Verbindung zwischen der Lufttrocknerpatrone und dem Lufttrocknergehäuse 18 besteht dabei zumindest solange, bis ein eventuell in der Lufttrocknerpatrone vorhandener lnnendruck sich über die Entlüftungsöffnung 16 abgebaut hat. Die Gefahr für den Monteur durch eine aufgrund des Innendrucks wegfliegende Lufttrocknerpatrone ist damit gebannt. Nach dem Auswechseln der Lufttrocknerpatrone dichtet die Entlüftungsvorrichtung 10 durch ein Drehen des Bajonettrings 30 in eine Verriegelungsposition die Entlüftungsöffnung 16 ebenso selbsttätig wieder ab. Das völlige Abdichten erfolgt dabei erst in der Verriegelungsposition des Bajonettrings 30, weshalb eine fehlerhafte oder falsche Montage der Lufttrocknerpatrone und anschließende Inbetriebnahme durch die Undichtigkeit ebenso vermieden wird. Weiterhin ist gewährleistet, dass der Bajonettring eine ausreichende Kraft zur Befestigung der Lufttrocknerpatrone aufbringen kann, da die Inbetriebnahme erst in der Verriegelungsposition erfolgen kann. Neben dem Drehen des Bajonettrings 30 ist kein weiterer Arbeitsschritt zusätzlich erforderlich.

### Bezugszeichenliste

- 10: Entlüftungsvorrichtung
- 12: Lufttrocknerpatrone
- 14: Druckluftaufbereitungsanlage
- 16: Entlüftungsöffnung
- 18: Lufttrocknergehäuse
- 20: Dichtelement
- 22: elastisches Element
- 24: Metallstreifen
- 26: Rastung
- 28: Mittel
- 30: Bajonettring
- 32: Befestigungsmittel
- 34: Fahrzeug

## Patentansprüche

1. Entlüftungsvorrichtung (10) für eine eine Lufttrocknerpatrone (12) umfassende Druckluftaufbereitungsanlage (14) mit einer Entlüftungsöffnung (16) in einem Lufttrocknergehäuse (18) der Druckluftaufbereitungsanlage (14), **dadurch gekennzeichnet, dass** die Entlüftungsvorrichtung (10) ein Dichtelement (20) umfasst, welches ständig an dem Lufttrocknergehäuse (18) befestigt ist und die Entlüftungsöffnung (16) dicht verschließt, wenn die Lufttrocknerpatrone (12) an dem Lufttrocknergehäuse (18) montiert ist.

2. Entlüftungsvorrichtung (10) nach Anspruch 1, **dadurch gekennzeichnet, dass** das Dichtelement (20) ein elastisches Element (22) zum Abdichten der Entlüftungsöffnung (16) umfasst.

3. Entlüftungsvorrichtung (10) nach Anspruch 1 oder 2, **dadurch gekennzeichnet, dass** das Dichtelement (20) einen Metallstreifen (24) umfasst.

4. Entlüftungsvorrichtung (10) nach einem der vorhergehenden Ansprüche, **dadurch gekennzeichnet, dass** die Entlüftungsvorrichtung (10) Mittel (28) zum Anpressen des Dichtelements (20) an das Lufttrocknergehäuse (18) umfasst.

5. Entlüftungsvorrichtung (10) nach Anspruch 4, **dadurch gekennzeichnet, dass** die Mittel (28) zum Anpressen des Dichtelements (20) an einem die Lufttrocknerpatrone (12) am Lufttrocknergehäuse (18) fixierenden Bajonettring (30) angeordnet sind.

6. Entlüftungsvorrichtung (10) nach Anspruch 4 oder 5, **dadurch gekennzeichnet, dass** die Mittel (28) zum Anpressen des Dichtelements (20) bei montierter Lufttrocknerpatrone (12) in einer Rastung (26) fixiert sind.

7. Entlüftungsvorrichtung (10) nach Anspruch 6, **dadurch gekennzeichnet, dass** die Rastung (26) an dem Dichtelement (20) angeordnet ist.

8. Verfahren zur sicheren Demontage einer an einem Lufttrocknergehäuse (18) einer Druckluftaufbereitungsanlage (14) montierten Lufttrocknerpatrone (12), **dadurch gekennzeichnet,**
- **dass** in eine ersten Schritt ein Bajonettring (30) mit Mitteln (28) zum Anpressen eines an dem Lufttrocknergehause (18) ständig befestigten Dichtelements (20) an eine in dem Lufttrocknergehäuse (18) angeordnete Entlüftungsöffnung (16) aus einer Verriegelungsposition gedreht wird, wobei gleichzeitig das Dichtelement (20) von dem Anpressdruck der Mittel (28) zum Anpressen entlastet wird und durch die Entlüftungsöffnung (16) eine Entlüftung der Lufttrocknerpatrone (12) erfolgt,
- **dass** in einem zweiten Schritt der Bajonettring (30) weiter in eine Montage-/Demontageposition gedreht wird, in welcher zumindest die Lufttrocknerpatrone (12) von dem Lufttrocknergehäuse (18) abhebbar ist und
- **dass** in einem dritten Schritt zumindest die Lufttrocknerpatrone (12) von dem Lufttrocknergehäuse (18) abgehoben wird.

## Claims

1. Ventilation device (10) for a compressed air preparation system (14) comprising an air dryer cartridge (12) with a ventilation opening (16) in an air dryer housing (18) of the compressed air preparation system (14), **characterised in that** the ventilation device (10) comprises a sealing element (20) which is permanently fixed to the air dryer housing (18) and closes the ventilation opening (16) in a sealed way when the air dryer cartridge (12) is mounted on the air dryer housing (18).

2. Ventilation device (10) according to claim 1, **characterised in that** the sealing element (20) comprises an elastic element (22) for sealing the ventilation opening (16).

3. Ventilation device (10) according to claim 1 or 2, **characterised in that** the sealing element (20) comprises a metal strip (24).

4. Ventilation device (10) according to one of the preceding claims, **characterised in that** the ventilation device (10) comprises means (28) for pressing the sealing element (20) against the air dryer housing (18).

5. Ventilation device (10) according to claim 4, **characterised in that** the means (28) for pressing the sealing element (20) are arranged on a bayonet ring (30) fixing the air dryer cartridge (12) on the air dryer housing (18).

6. Ventilation device (10) according to claim 4 or 5, **characterised in that** the means (28) for pressing the sealing element (20), when the air dryer cartridge (12) is assembled, are fixed in a detent element (26).

7. Ventilation device (10) according to claim 6, **characterised in that** the detent element (26) is arranged on the sealing element (20).

8. Method for secure dismantling of an air dryer cartridge (12) assembled on an air dryer housing (18) of a compressed air preparation system (14), **characterised in that**
- in a first step a bayonet ring (30) with means (28) for pressing a sealing element (20) permanently fixed to the air dryer housing (18) against a ventilation opening (16) arranged in the air dryer housing (18) is rotated from a locked position, wherein the sealing element (20) is simultaneously unloaded from the pressing pressure of the pressing means (28) and a ventilation of the air dryer cartridge (12) takes place through the ventilation opening (16),
- in a second step the bayonet ring (30) is further rotated into an assembly / disassembly position, in which at least the air dryer cartridge (12) can be lifted from the air dryer housing (18), and
- in a third step at least the air dryer cartridge (12) is lifted from the air dryer housing (18).

## Revendications

1. Dispositif (10) de mise à l'atmosphère pour un système (14) de préparation d'air comprimé, comprenant une cartouche (12) de dessicateur d'air ayant une ouverture (16) de mise à l'atmosphère dans un boîtier (18) de dessicateur d'air du système (14) de préparation d'air comprimé, **caractérisé en ce que** le dispositif (10) de mise à l'atmosphère comprend un élément (20) d'étanchéité, qui est fixé en permanence au boîtier (18) de dessicateur d'air et qui ferme d'une manière étanche l'ouverture (16) de mise à l'atmosphère, lorsque la cartouche (12) de dessicateur d'air est montée sur le boîtier (18) de dessicateur d'air.

2. Dispositif (10) de mise à l'atmosphère suivant la revendication 1, **caractérisé en ce que** l'élément (20) d'étanchéité comprend un élément (22) élastique pour rendre étanche l'ouverture (16) de mise à l'atmosphère.

3. Dispositif (10) de mise à l'atmosphère suivant la revendication 1 ou 2, **caractérisé en ce que** l'élément (20) d'étanchéité comprend une bande (24) métallique.

4. Dispositif (10) de mise à l'atmosphère suivant l'une des revendications précédentes, **caractérisé en ce que** le dispositif (10) de mise à l'atmosphère comprend des moyens (28) pour presser l'élément (20) d'étanchéité sur le boîtier (18) de dessicateur d'air.

5. Dispositif (10) de mise à l'atmosphère suivant la revendication 4, **caractérisé en ce que** les moyens (28) sont disposés pour presser l'élément d'étanchéité sur un anneau (30) de baïonnette immobilisant la cartouche (12) de dessicateur d'air sur le boîtier (18) de dessicateur d'air.

6. Dispositif (10) de mise à l'atmosphère suivant la revendication 4 ou 5, **caractérisé en ce que** les moyens (28) de pression de l'élément (20) d'étanchéité sont immobilisés dans un encliquetage (26), lorsque la cartouche (12) de dessicateur d'air est montée.

7. Dispositif (10) de mise à l'atmosphère suivant la revendication 6, **caractérisé en ce que** l'encliquetage (26) est disposé sur l'élément (20) d'étanchéité.

8. Procédé de démontage sécurisé d'une cartouche (12) de dessicateur d'air montée sur un boîtier (18) de dessicateur d'air d'un système (14) de préparation d'air comprimé, **caractérisé**
- **en ce que**, dans un premier stade, on fait tourner, hors d'une position de verrouillage, un anneau (30) de baïonnette par des moyens (28) de pression d'un élément (20) d'étanchéité, fixé en permanence au boîtier (18) de dessicateur d'air, sur une ouverture (16) de mise à l'atmosphère prévue dans le boîtier (18) de dessicateur d'air, tandis que l'élément (20) d'étanchéité est déchargé de la pression des moyens (28) de pression et qu'une mise à l'atmosphère de la cartouche (12) de dessicateur d'air s'effectue par l'ouverture (16) de mise à l'atmosphère,
- **en ce que**, dans un deuxième stade, on continue à faire tourner l'anneau (30) de baïonnette pour qu'il vienne dans une position de montage/démontage, dans laquelle au moins la cartouche (12) de dessicateur d'air peut être retirée du boîtier (18) de dessicateur d'air et
- **en ce que**, dans un troisième stade, on retire au moins la cartouche (12) de dessicateur d'air du boîtier (18) de dessicateur d'air.
